## Europäisches Patentamt

## European Patent Office

## Office européen des brevets

(19)

(11) Publication number: **0 168 992**
**B1**

(12) # EUROPEAN PATENT SPECIFICATION

(45) Date of publication of the patent specification:
**24.08.88**

(51) Int. Cl.⁴: **A 63 B 49/10**

(21) Application number: **85304470.9**

(22) Date of filing: **24.06.85**

(54) **Games racket.**

(30) Priority: **17.07.84 GB 8418192**

(43) Date of publication of application:
**22.01.86 Bulletin 86/4**

(45) Publication of the grant of the patent:
**24.08.88 Bulletin 88/34**

(84) Designated Contracting States:
**AT BE DE FR GB IT NL SE**

(56) References cited:
**FR - A - 2 270 908**
**FR - A - 2 359 618**
**GB - A - 2 015 886**
**US - A - 4 066 260**

(73) Proprietor: **DUNLOP LIMITED, St. James's House 23-24 King Street, London SW1Y 6RA (GB)**

(72) Inventor: **Haines, Robert Christopher, 26 Highfield Avenue, Birdsedge Huddersfield West Yorkshire (GB)**

(74) Representative: **Moore, John Hamilton et al, Dunlop Limited Group Patent Department P.O. Box 504, Erdington Birmingham B24 9QH (GB)**

## Description

This invention relates to rackets for use in games, for example tennis, squash and badminton and is particularly concerned with the construction of the frames of these rackets.

In our GB-A-2 015 886 we have described and claimed a games racket frame in which the frame comprises a head and a shaft, at least the head being a hollow injection moulding of thermoplastics material reinforced with short filament reinforcing material, in which the wall of the moulding which lies at the outer circumference of the head is joined to the wall which lies at the inner circumference of the head by an internal support means and the stringing holes in the head pass through the support means, the walls and support means of the moulding being integrally-formed. By «thermoplastics material reinforced with short filament reinforcing material» is mean a reinforced thermoplastics material in which the reinforcements are in the form of short discrete lengths of fibre-reinforcing material randomly dispersed in the thermoplastics resin matrix.

The racket constructions so described in GB-A-2 015 886 are a significant step forward in that they provide the first really successful commercial rackets of hollow frame construction made by an injection moulding technique. The hollow frame is reinforced by integrally-moulded internal support means – usually in the form of pillars – joining the outer wall to the inner wall of the head of the frame. These pillars support the walls and provide strength in the moulded product to resist the considerable forces exerted on the hollow frame, particularly by the tension of the racket strings. The total force exerted by the strings on the hollow frame can be considerable, e.g. up to a total of 500 Kg force in the two perpendicular directions of the strings, i.e. longitudinal and transverse string directions.

The present invention aims to provide alternative. Advantageous frame constructions whereby hollow injection-moulded racket frames of reinforced thermoplastics material may be made without internal support pillars passing through the frame from the outer to the inner wall so that improved moulding techniques may be employed.

Accordingly, in one aspect the invention provides a games racket frame in which the frame comprises a head and a shaft, at least the head being a hollow injection moulding of thermoplastics material reinforced with short filament reinforcing material, as herein defined, which contains integrally-moulded stringing holes, the holes being in opposed pairs, the first of each pair being in the wall of the moulding which lies at the inner circumference of the head and the second of each pair being in the wall of the moulding which lies at the outer circumference of the head, each first hole being defined by an integrally-moulded reinforcing first tubular projection or apertured boss which projects inside the hollow frame and each second hole being defined by an integrally-moulded reinforcing second tubular projection or apertured boss, the first and second tubular projections or apertured bosses projecting inwardly of the hollow frame towards each other but not meeting, the second tubular projection or apertured boss defining a larger area hole than the first.

In another aspect the invention provides a games racket comprising a strung frame of the type of the immediately preceding paragraph.

Thus the racket frame is provided with strengthening means provided at the stringing holes and extending inside the hollow frame so that the head of the frame is provided with pairs of tubular projection bosses (tubular projections hereafter for convenience) projecting inwardly towards each other but not meeting, i.e. the total length of projection of the pair of tubular projections is less than the transverse width of the hollow moulding at that point. As indicated above, for convenience a tubular projection on the inner wall will be referred to as a first tubular projection and a tubular projection on the outer wall as a second tubular projection. The bore of the tubular projections on the outer circumference of the head, i.e. the second tubular projections, is preferably radiussed at its outer end so as to provide guidance for the strings and to protect them against sharp edges. Similarly the inner end of the first tubular projections may be radiussed.

The two tubular projections may be of equal length, i.e. may project inwardly for an equal distance but this is not essential and it may be preferred, for example, that the second tubular projection projects further inwardly than the first.

The overall size of the tubular projections in order to provide adequate strength will of course depend on the type of racket frame in question, e.g. whether for tennis, badminton or squash, and will also depend on the wall thickness used, this again being determined by the envisaged use of the frame. The average skilled man of the art will readily be able to determine sizes satisfactory for his purpose but the dimensions given below with reference to the accompanying drawings may be considered illustrative by way of exemplification for a tennis racket frame.

The racket frames of the invention are preferably moulded from reinforced polyamide although other thermoplastics polymeric material may be used, e.g. polycarbonate, acrylonitrile-butadiene-styrene (ABS), acetal resin and poly-(phenylene oxide) (PPO) may be used.

The thermoplastics material used is preferably reinforced with from 10% to 40% by weight of carbon fibres based on total weight of the reinforced matrix. Alternatively glass or aromatic polyamide (e.g. Kevlar-Registered Trade Mark) fibres may be used or mixtures of any of these reinforcing fibres may be used.

The transverse sectional shape of the frame may be any desired shape, for example circular, oval or rectangular.

The latter may be preferred as its box-like section can give very high stiffness and strength to weight ratios. If it is desired, alongitudinally-extending groove or channel may be formed in the outer face of the wall of the frame which is to lie on the outer circumference of the head. The strings of the racket may then be recessed in this groove to safeguard them from abrasion. The transverse sectional shapes reffered to above, therefore, include those shapes when modified by incorporation of such a groove or channel.

Racket frames of the invention can be made by an injection-moulding process involving a destructible core and it is preferred to use a core that can be melted below the softening point of the set plastics material of the frame. The use of a core of this type in the moulding of a hollow article made from thermoplastics material is known and is described for example in GB-A-828,685. Basically, the principle involved is to make an appropriately-shaped core of fusible material (metal alloy in GB-A-828,685) whose melting point is lower than the temperature achieved in the injection-moulding cycle. Due to the thermal conductivity of the core, the moulding is effected before the metal reaches its melting point. Alternatively, the core can be cooled by heat exchange during the moulding cycle to prevent its melting. Once the moulded article has set, the temperature can be raised sufficiently to melt the core but insufficiently to melt or distort the moulding.

Accordingly in a further aspect the invention provides a method of making a frame for a games racket, the frame comprising a head and a shaft, which method comprises the following steps:

forming a fusible core with holes through it corresponding to the locations of the desired stringing holes,

placing the core in a mould,

inserting mould pins into the holes through the core, injecting thermoplastics material reinforced with short filament reinforcing material,.

as herein defined, around the core,

allowing to thermoplastics material to set,  ·

raising the temperature sufficiently to melt the core without melting or distorting the moulding,

and removing the molten core material,

the core having a melting point below the injection temperature and the mould pins being of size to fill completely their respective core holes for part of their length and being shaped to allow the injected thermoplastics material to form a reinforcing tubular projection extending inwardly of the hollow frame at each of said stringing hole locations in the wall of the moulding at the inner circumference of the head and at the outer circumference of the head.

As indicated above, the fusible core is preferably of a low melting point metal alloy.

The invention is further illustrated by reference to the accompanying drawings in which:

Figure 1 is a diagrammatic representation in partsection of a portion of an injection mould containing a suitable mould core with a mould pin in position in a desired stringing hole location;

Figure 2 is a similar view to that of Figure 1 after thermoplastics material has been injected into the mould;

Figure 3 is a section of a portion of racket frame after removal from the mould and removal of the fusible core, and

Figure 4 is a view on arrow A of Figure 3.

It will be appreciated that the portion of mould, core and frame shown in the drawings is shown in straight line for convenience rather than in its actual curved form corresponding to the loop of the head.

The formation of one pair of stringing holes is illustrated; this will of course be repeated around the head of the frame as required.

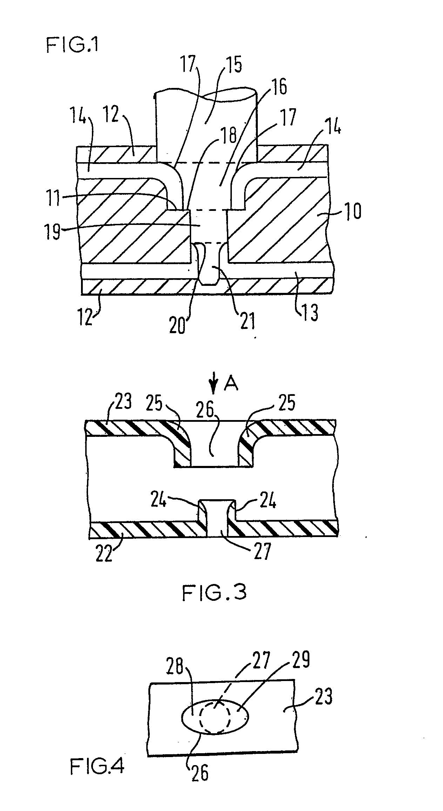

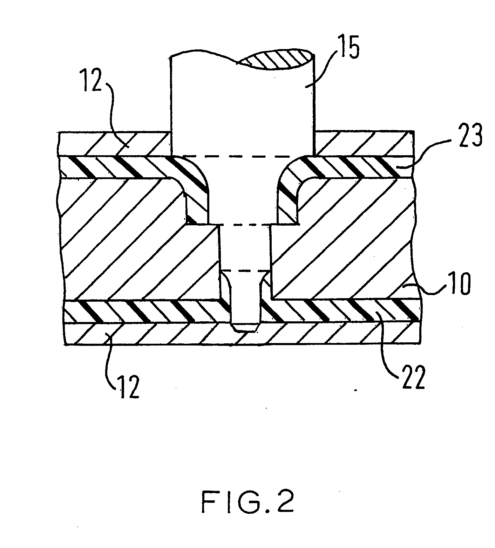

With reference to Figure 1 of the drawings, a fusible core 10 is first made having a configuration corresponding to the desired internal configuration of the eventual head of the racket. A stepped bore 11 is formed through the core at each desired stringing location.

Core 10 is placed in a suitable injection mould 12 and is spaced from the interior walls of the mould by conventional spacing means (not shown) to define gaps 13 and 14 corresponding to the desired walls at the inner circumference and outer circumference respectively of the head.

A double-stepped pin 15 is inserted through each bore 11 of the core. Portion 16 of the pin 15 corresponds to the desired second tubular projection of the product and has radiussed shoulders 17. A first step 18 on the pin then leads to its middle portion 19, which portion locates tightly in the bore 11 of core 10. (Portion 19 and its corresponding portion of bore 11 have a mating slight taper towards the narrower end of the pin. This is not shown in the drawings). A second step 20 (radiussed) leads to portion 21 of the pin, which corresponds to the desired first tubular projection of the product.

The extremity of portion 21 locates in a suitable recess in the wall of mould 12.

Injection of suitable reinforced thermoplastics material around the core then forms the desired frame.

This stage is illustrated in Figure 2 where inner circumference wall 22 and outer circumference wall 23 of the frame can be seen.

When the frame has set, the mould pin can be removed and the fusible core can be melted out after removal of the moulding from the mould. This stage is shown in Figures 3 and 4.

First tubular projection 24 has been formed on the inner wall 22 of the frame and second tubular projection 25 has been formed on outer wall 23. Tubular projection 24 is radiussed at its inner end and tubular projection 25 is radiussed at its outer end. The two projections define an opposed pair of stringing holes through which a string may be passed through the frame.

It will be seen from Figure 4 that second stringing hole 26 (defined by tubular projection 25) is of elliptical shape with its major axis along the circumferential axis of the head whereas first stringing hole 27 (shown dotted and defined by tubular projection 24) is circular. The minor axis of elipse 26 is the same dimension as the diameter of hole 27. It will also be noted that areas 28 and 29 of elipse 27 correspond to the radiussed portion 17 of pin 15.

As an example of suitable dimensions for a tennis racket frame, the frame may have a wall thickness of 2.5 mm, the internal diameter of the first (circular) tubular projection is 2.5 mm and its length is 5 mm including the wall thickness of the frame. The internal diameter of the second tubular projection when circular is 4.5 mm and its length is 6 mm including the wall thickness of the frame. The overall thickness of the section of the frame, i.e. its transverse width, is 15 mm so that there is a gap of 4 mm between the two tubular projections inside the frame.

Where the second tubular projection is elliptical its major axis may be 5 mm long and its minor axis 2.5 mm.

It will be appreciated that the fusible cores employed can conveniently be shaped so that the shaft and handle portion of the frame are formed as an integral moulding with the head. Shaft and handle shapes as desired can readily be formed but have not been described above as they can be designed as required by the skilled man of the art.

It will also be appreciated that the tubular projections need not be cylindrical or elliptical in shape and that other shapes could be used as desired. A combination of shapes can be used, if desired so that, as exemplified above, the second tubular projections are elliptical in plan form and the first tubular projections are circular in plan form.

The mould pin arrangement described above is also very advantageous in that the use of stepped pins enables both tubular projections to be formed by a single pin that is withdrawn in one direction. Clearly this leads to relative simplicity of mould design. Also the series of pins being located tightly within their respective bores in the mould core means that there is a positive location at each hole so that there is excellent resistance to the considerable pressure of the injected thermoplastics material. Hence a product of very uniform wall thickness can be achieved. This enables thinner-walled products to be made to a higher standard of uniformity and hence enables lighter products to be made.

## Claims

1. A games racket frame in which the frame comprises a head and a shaft, at least the head being a hollow injection moulding of thermoplastics material reinforced with short filament reinforcing material, which contains integrally-moulded stringing holes, the holes being in opposed pairs, the first (27) of each pair being in the wall (22) of the moulding which lies at the inner circumference of the head and the second (26) of each pair being in the wall (23) of the moulding which lies at the outer circumference of the head, characterised in that each first hole is defined by an integrally-moulded reinforcing first tubular projection (24) and each second hole being defined by an integrally-moulded reinforcing second tubular projection (25), the first and second tubular projections projecting inwardly of the hollow frame towards each other but not meeting, the second tubular projection defining a larger area hole than the first.

2. A games racket frame according to Claim 1, characterised in that the second tubular projection (25) projects further inwardly than the first tubular projection (24).

3. A games racket frame according to Claim 1 or 2, characterised in that the second tubular projection (25) is radiussed at its extremity in the wall of the moulding which lies at the outer circumference of the head.

4. A games racket frame according to Claim 1, 2 or 3, characterised in that the second tubular projection (25) defines an elliptically shaped hole (26).

5. A games racket frame according to Claim 4, characterised in that the major axis of the elipse (26) is parallel to the circumferential axis of the head.

6. A games racket frame according to Claim 4 or 5, characterised in that the first tubular projection (24) defines a circular hole (27) and the minor axis of the elipse (26) is greater than or equal to the diameter of the circle (27).

7. A games racket frame according to any of the preceding claims, characterised in that the first tubular projection (24) is radiussed at its inner extremity.

8. A games racket frame according to any one of the preceding claims, characterised in that the reinforcing material is carbon fibre, glass fibre, aromatic polyamide fibre or a mixture thereof.

9. A games racket frame according to any one of the preceding claims, characterised in that the thermoplastics material is polyamide.

10. A games racket frame according to any one of Claims 1 to 8, characterised in that the thermoplastics material is polycarbonate, acrylonitrile-butadiene-styrene, acetal resin or poly(phenylene oxide).

11. A games racket comprising a strung frame of any one of the preceding claims.

12. A method of making a frame for a games racket, the frame comprising a head and a shaft, which method comprises the following steps:

forming a fusible core with holes through it corresponding to the location of the desired stringing holes,

placing the core in a mould,

inserting mould pins into the holes through the core,

injecting thermoplastics material reinforced with short filament reinforcing material around the core,

allowing the thermoplastics material to set, raising the temperature sufficiently to melt the core without melting or distorting the moulding,

and removing the molten core material,

the core having a melting point below the injection temperature

characterised in that the mould pins (15) are of size to fill completely their respective core holes (11) for part of their length and being shaped to allow the injected thermoplastics material to form a reinforcing tubular projection (24, 25) extending inwardly of the hollow frame at each of said stringing hole locations in the wall of the moulding at the inner circumference of the head and at the outer circumference of the head.

## Patentansprüche

1. Spielschlägerrahmen, bei welchem der Rahmen einen Kopf und einen Schaft aufweist, wobei zumindest der Kopf ein hohler Spritzgussformling aus thermoplastischem Material ist, das mit kurzfaserigem Verstärkungsmaterial verstärkt ist, wobei der Kopf integral geformte Bespannungslöcher enthält, die einander paarweise gegenüberliegen, wobei das erste Loch (27) jedes Paares in der am Innenumfang des Kopfes liegenden Wand (22) des Formlings und das zweite Loch (26) jedes Paares in der am Aussenumfang des Kopfes liegenden Wand (23) des Formlings ausgebildet ist, dadurch gekennzeichnet, dass jedes erste Loch durch einen ersten integral geformten verstärkenden rohrförmigen Vorsprung (24) und jedes zweite Loch durch einen zweiten integral geformten verstärkenden rohrförmigen Vorsprung (25) gebildet ist, wobei der erste und der zweite rohrförmige Vorsprung im Inneren des hohlen Rahmens gegeneinander ragen, aber nicht aufeinander treffen und der zweite rohrförmige Vorsprung ein Loch mit grösserer Fläche als der erste bildet.

2. Spielschlägerrahmen nach Anspruch 1, dadurch gekennzeichnet, dass der zweite rohrförmige Vorsprung (25) weiter nach innen ragt als der erste rohrförmige Vorsprung (24).

3. Spielschlägerrahmen nach Anspruch 1 oder 2, dadurch gekennzeichnet, dass der zweite rohrförmige Vorsprung (25) an seinem Ende in der am Aussenumfang des Kopfes liegenden Formlingswand gerundet ist.

4. Spielschlägerrahmen nach einem der Ansprüche 1 bis 3, dadurch gekennzeichnet, dass der zweite rohrförmige Vorsprung (25) ein elliptisch geformtes Loch (26) bildet.

5. Spielschlägerrahmen nach Anspruch 4, dadurch gekennzeichnet, dass die Hauptsache der Ellipse (26) parallel zur Umfangsachse des Kopfes verläuft.

6. Spielschlägerrahmen nach Anspruch 4 oder 5, dadurch gekennzeichnet, dass der erste rohrförmige Vorsprung (24) ein kreisförmiges Loch (27) bildet und die Nebenachse der Ellipse (26) grösser als der oder gleich dem Durchmesser des Kreises (27) ist.

7. Spielschlägerrahmen nach einem der vorhergehenden Ansprüche, dadurch gekennzeichnet, dass der erste rohrförmige Vorsprung (24) an seinem inneren Ende gerundet ist.

8. Spielschlägerrahmen nach einem der vorhergehenden Ansprüche, dadurch gekennzeichnet, dass das Verstärkungsmaterial aus Kohlenstofffasern, Glasfasern, aromatische Polyamidfasern oder aus einem Gemisch derselben besteht.

9. Spielschlägerrahmen nach einem der vorhergehenden Ansprüche, dadurch gekennzeichnet, dass das thermoplastische Material Polyamid ist.

10. Spielschlägerrahmen nach einem der Ansprüche 1 bis 8, dadurch gekennzeichnet, dass das thermoplastische Material Polycarbonat, Acrylnitril-Butadien-Styrol, Acetalharz oder Poly(phenylenoxid) ist.

11. Spielschlägerrahmen mit einem bespannten Rahmen nach einem der vorhergehenden Ansprüche.

12. Verfahren zum Herstellen eines Spielschlägerrahmens, der einen Kopf und einen Schaft aufweist, wobei das Verfahren die folgenden Schritte umfasst:

Formen eines schmelzbaren Kernes mit Durchtrittslöchern entsprechend den Stellen der erwünschten Bespannungslöcher,

Anordnen des Kernes in einer Form,

Einsetzen von Formstiften in die Löcher durch den Kern,

Einspritzen von thermoplastischem, mit kurzfaserigem Verstärkungsmaterial verstärktem Material um den Kern herum,

Verfestigen des thermoplastischen Materials,

Anheben der Temperatur in ausreichendem Masse, um den Kern zu schmelzen, ohne jedoch den Formling zu schmelzen oder zu verformen,

und Entfernen des geschmolzenen Kernmaterials,

wobei der Kern einen Schmelzpunkt hat, der unterhalb der Einspritztemperatur liegt,

dadurch gekennzeichnet, dass die Formstifte (15) eine solche Grösse haben, dass sie ihre entsprechenden Kernlöcher (11) über einen Teil ihrer Länge vollständig ausfüllen, und so geformt sind, dass sie es dem thermoplastischen Material gestatten, einen rohrförmigen Verstärkungsvorsprung zu bilden, der an jeder Bespannungslochstelle in der Formlingswand am Innenumfang und am Aussenumfang des Kopfes in das Innere des hohlen Rahmens ragt.

## Revendications

1. Une armature de raquette à jouer, qui comprend un cadre et un manchon, au moins le cadre étant formé par une pièce creuse moulée par injection en une matière thermoplastique renforcée par de courts filaments d'une matière de renforcement, comme défini ci-dessus, cette pièce moulée comportant des trous de cordage venus de moulage, les trous étant disposés en opposition par paire, le premier trou (27) de chaque paire étant situé dans la paroi (22) de la pièce moulée qui est placée sur la circonférence intérieure du cadre et le second trou (26) de chaque paire étant situé dans la paroi (23) de la pièce moulée qui est située sur la circonférence extérieure du cadre, caractérisée en ce que chaque premier trou est défini par une première saillie tubulaire (24) ou bossage évidé de renforcement venu de moulage, qui fait saillie à l'intérieur de l'armature creuse, et chaque second trou étant défini par une seconde saillie tubulaire (25) ou bossage évidé de renforcement, venu de moulage, les premier et second bossages évidés ou saillies tubulaires faisant saillie vers l'intérieur de l'armature creuse l'un vers l'autre mais ne se rejoignant pas, le second bossage évidé ou saillie tubulaire définissant un trou de section plus grande que le premier.

2. Une armature de raquette à jouer selon la revendication 1, caractérisée en ce que la seconde protubérance tubulaire (25) fait plus saillie vers l'intérieur que la première protubérance tubulaire (24).

3. Une armature de raquette à jouer selon la revendication 1 ou 2, caractérisée en ce que la seconde protubérance tubulaire (25) est arrondie à son extrémité dans la paroi de la pièce moulée qui est située sur la circonférence extérieure du cadre.

4. Une armature de raquette à jouer selon une des revendications 1, 2 ou 3, caractérisée en ce que la seconde protubérance tubulaire (25) définit un trou (26) de forme elliptique.

5. Une armature de raquette à jouer selon la revendication 4, caractérisée en ce que le grand axe de l'ellipse (26) est parallèle à l'axe circonférentiel du cadre.

6. Une armature de raquette à jouer selon la revendication 4 ou 5, caractérisée en ce que la première protubérance tubulaire (24) définit un trou circulaire (27) et le petit axe de l'ellipse (26) est supérieur ou égal au diamètre de ce cercle (27).

7. Une armature de raquette à jouer selon une quelconque des revendications précédentes, caractérisée en ce que la première protubérance (24) est arrondie à son extrémité intérieure.

8. Une armature de raquette à jouer selon une quelconque des revendications précédentes, caractérisée en ce que la matière de renforcement est constituée par des fibres de carbone, des fibres de verre, des fibres de polyamide aromatique ou un mélange de celles-ci.

9. Une armature de raquette à jouer selon une quelconque des revendications précédentes, caractérisée en ce que la matière thermoplastique est un polyamide.

10. Une armature de raquette à jouer selon une quelconque des revendications 1 à 8, caractérisée en ce que la matière thermoplastique est un polycarbonate, de l'acrylonitrile-butadiène-styrène, une résine d'acétal ou de l'oxyde de poly (phénylène).

11. Une raquette à jouer comprenant une armature robuste selon une quelconque des revendications précédentes.

12. Un procédé de fabrication d'une armature pour une raquette à jouer, l'armature comprenant un cadre et un manche, ledit procédé comprenant les étapes suivantes:

– former un noyau fusible traversé par des trous correspondants aux emplacements des trous de cordage désirés,

– placer le noyau dans un moule,

– insérer des broches de moulage dans les trous traversant le noyau, injecter une matière thermoplastique renforcée par de courts filaments d'une matière de renforcement, comme défini ici, autour du noyau,

– laisser durcir la matière thermoplastique,

– augmenter la température suffisamment pour fondre le noyau sans fusion ou déformation de la pièce à mouler, et

– enlever la matière fondue du noyau,

– le noyau ayant un point de fusion inférieur à la température d'injection,

caractérisé en ce que les broches de moulage (15) sont dimensionnées de façon à remplir complètement leurs trous de noyau respectifs (11) sur une partie de leur longueur et sont profilés de façon à permettre à la matière thermoplastique injectée de former une protubérance tubulaire de renforcement (24, 25) s'étendant vers l'intérieur de l'armature creuse dans chacun des emplacements desdits trous de cordage ménagés dans la paroi de la pièce moulée sur la circonférence intérieure et sur la circonférence extérieure du cadre.

4 2

FIG.1

↓ A

FIG.3

FIG.4

2/2

FIG.2